Europäisches Patentamt

European Patent Office

Office européen des brevets

(11) Numéro de publication: **0 198 757**
**A1**

## (12) DEMANDE DE BREVET EUROPEEN

(21) Numéro de dépôt: **86400684.6**

(22) Date de dépôt: **28.03.86**

(51) Int. Cl.4: **B23K 1/00**

(30) Priorité: **02.04.85 FR 8505011**

(43) Date de publication de la demande:
**22.10.86 Bulletin 86/43**

(84) Etats contractants désignés:
**DE GB IT NL SE**

(71) Demandeur: **COMPAGNIE D'INFORMATIQUE MILITAIRE SPATIALE ET AERONAUTIQUE**
**25, rue de Courcelles**
**F-75008 Paris(FR)**

(72) Inventeur: **Saint-Martin, Xavier**
**THOMSON-CSF SCPI-19, avenue de Messine**
**F-75008 Paris(FR)**

(74) Mandataire: **Benoit, Monique**
. **THOMSON-CSF SCPI 19, avenue de Messine**
**F-75008 Paris(FR)**

(54) Limitation de la corrosion en machine de refusion en phase-vapeur.

(57) L'invention a principalement pour objet une limitation de la corrosion en machine de refusion en phase-vapeur.

Dans le dispositif de soudure en phase vapeur on utilise du liquide chloré et fluoré. Leur décomposition par la chaleur libère des ions qui mis en présence d'eau forme l'acide fluoridrique et chloridrique. Ces acides corrodent la cuve (1) qui permet la mise en oeuvre du procédé de soudure ainsi que les éléments métalliques des composants soudés. Le dispositif objet de la présente invention élimine l'eau du liquide secondaire (20) en isolant les vapeurs de ces liquides de l'atmosphère, empêchant la pénétration de l'eau (21) dans la cartouche de séchage (19) et en permettant le séchage avant emploi du liquide secondaire (20) neuf mis en oeuvre. L'invention s'applique principalement à la soudure par refusion en phase-vapeur.

# FIG_2

0 198 757

## LIMITATION DE LA CORROSION EN MACHINE DE REFUSION EN PHASE-VAPEUR

L'invention a principalement pour objet une limitation de la corrosion en machine de refusion en phase-vapeur.

L'augmentation du nombre de connexions à souder sur des cartes électroniques ainsi que, notamment le développement des cartes électroniques produites en faible série ont favorisé le développement des machines de soudure par refusion en phase-vapeur. Durant le procédé de soudure en phase-vapeur, le métal de soudure est mis en place, dans un premier stade, sous forme de pâte, ou de préforme solide. La soudure proprement dite s'effectue dans un second stade par apport de chaleur. Le chauffage est obtenu par condensation dudit liquide primaire sur le composant. Le liquide primaire est chauffé à son point d'ébullition situé au dessus du point de fusion de la soudure, de manière à avoir une zone de vapeur saturée. A la pression atmosphérique, la température de la vapeur saturée est la même que la température d'ébullition du liquide. Du fait que la totalité de la surface de l'objet à souder est en contact avec la vapeur, ce dernier est chauffé de façon uniforme, et permet la soudure simultanée de toutes les connexions à effectuer.

La pièce ou le composant à souder est plongé dans une zone de vapeur primaire. Cette vapeur se condense au contact de la pièce assurant ainsi l'apport de chaleur et la fusion de la soudure préalablement mise en place.

En vue de réduire les pertes de liquide primaire par convection, diffusion ou fuite, une zone de vapeur secondaire formant écran est créée à partir d'un liquide souvent de plus grande densité, une plus basse température d'ébullition et d'un coût moindre.

On utilise comme liquide primaire par exemple le liquide vendu par la Société 3M sous la marque "Fluorinert" sous la référence FC 70. On peut utiliser comme liquide secondaire par exemple le trifluoro-trichlore-éthane de formule : $CFCl_2 - CClF_2$. Le procédé de soudure sous phase-vapeur utilise des liquides fluorés portés à des hautes températures, par exemple 215° C. A ces températures les liquides primaires et secondaires ont tendance à se décomposer partiellement, le liquide secondaire libérant des ions $Cl^-$ et $F^-$. La présence de ces ions va provoquer deux types de corrosion. D'une part une corrosion sèche par formation de chlorure et de fluorure de métaux attaqués. D'autre part une corrosion aqueuse par formation d'acide en présence d'eau. La présence des ions chlore et fluor va avoir deux conséquences, d'une part la corrosion de l'appareil pour soudure en phase-vapeur, et d'autre part la présence d'ions sur les pièces soudées pouvant aboutir à des corrosions.

Le dispositif selon la présente invention propose une élimination complète de l'eau dans le liquide secondaire et par là même, élimination de la corrosion acide due à ce liquide.

La présente invention a principalement pour objet une machine de refusion en phase-vapeur comportant une cuve contenant un liquide primaire en ébullition et un liquide secondaire vaporisé destiné à limiter les pertes du liquide primaire, des moyens de lavage, des moyens de séchage du liquide secondaire, une réserve de liquide secondaire comportant des moyens d'isolement hermétique, des moyens de lavage et des moyens de séchage du liquide secondaire.

L'invention sera mieux comprise au moyen de la description ci-après, des figures annexées, données comme des exemples non limitatifs parmi lesquels :

- la figure 1 est un schéma d'un dispositif du type connu ;
- la figure 2 est un schéma d'une première variante de réalisation du dispositif de régénération du liquide secondaire selon l'invention ;
- la figure 3 est un schéma d'une seconde réalisation du dispositif de régénération du liquide secondaire selon l'invention ;
- la figure 4 est un schéma d'un dispositif de soudage sous phase-vapeur selon l'invention.

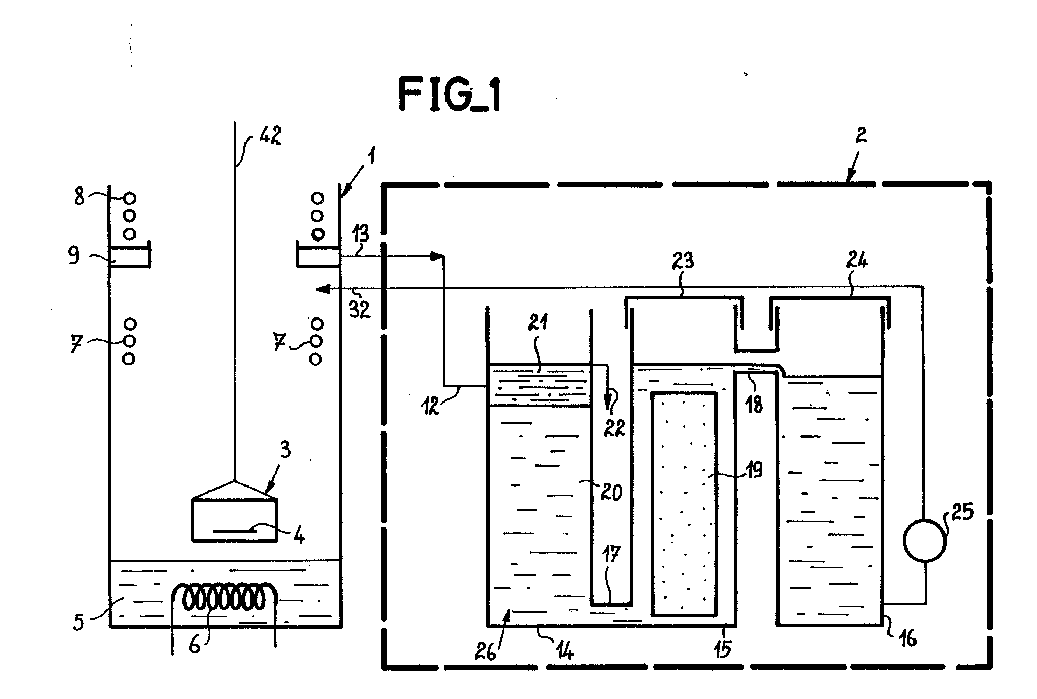

Sur les figures 1 à 4 on a utilisé les mêmes références pour désigner les mêmes éléments.

Sur la figure 1, on peut voir un dispositif de soudage en phase-vapeur de type connu. Ce dispositif comporte une cuve 1 au fond de laquelle se trouve le liquide primaire 5. Le liquide 5 est porté à ébullition par des moyens de chauffage 6. Dans la zone de vapeur primaire est descendue par un câble 42, une nacelle 3 contenant des cartes électroniques 4 sur lesquelles on veut souder des composants. Le liquide primaire 5 se condense sur un serpentin réfrigéré 7. Le liquide 5 condensé retombe au fond de la cuve 1. Pour économiser le liquide primaire, on injecte en 32 un liquide secondaire 20. Le liquide secondaire 20 assure aussi le préchauffage des cartes 4 que l'on désire souder. Le liquide secondaire 20 se condense sur un serpentin réfrigéré 8 et est recueilli par une gouttière 9. Le liquide secondaire 20 est évacué de la cuve 1 par une tuyauterie 13. Le liquide secondaire 20 est introduit dans un dispositif 2 de lavage et séchage par une arrivée 12. Le dispositif 2 comporte une cuve de lavage 14 contenant de l'eau 21. Le liquide secondaire 20 est plus lourd que l'eau, ainsi l'eau 21 surnage dans la cuve de lavage 14 sur le liquide secondaire 20. L'arrivée 12 de la tuyauterie 13 amenant le liquide secondaire 20 débouche au niveau de l'eau 21 afin de faire barboter le liquide secondaire dans l'eau. Une alimentation 26 en eau propre est prévue au fond de la cuve de lavage 14. L'eau 21 étant moins dense que le liquide secondaire 20 remonte à la surface. Une évacuation 22 de l'eau usée est prévue au niveau maximal atteint par l'eau. La cuve de lavage 14 est reliée par une tuyauterie 17 à une cuve de séchage 15. La tuyauterie 17 est placée au niveau du fond de la cuve de lavage 14 et/ou de la cuve de séchage 15. La cuve de séchage 15 comporte une cartouche 19 assurant l'élimination de l'eau. La cartouche 19 contient par exemple de la silice poreuse. La cuve 15 est munie d'un couvercle 23 limitant l'évaporation du liquide 20. La cuve de séchage 15 est reliée à une réserve 16 de liquide secondaire 20 par une tuyauterie 18. La réserve 16 est munie d'un couvercle 24 limitant l'évaporation du liquide secondaire 20. Des moyens de pompage 25 permettent la réinjection par une tuyauterie 32 du liquide secondaire 20 dans la cuve 1.

Le dispositif de la figure 1 subit une corrosion rapide du fait de la présence d'eau dans le liquide secondaire. L'eau peut être introduite dans le liquide secondaire 20 à trois niveaux. En fonctionnement normal, à partir de la vapeur d'eau présente dans l'air ambiant. Lors du remplacement du liquide secondaire 20 ou de la mise à niveau de la réserve 16 par du liquide secondaire neuf contenant de l'eau. En cas d'incident, l'eau 21 de la cuve de lavage 14 risque de passer dans la cuve de séchage 15 et ainsi saturer la cartouche de séchage 19 puis passer dans la réserve 16.

Le dispositif objet de la présente invention permet d'éliminer l'eau du liquide secondaire 20.

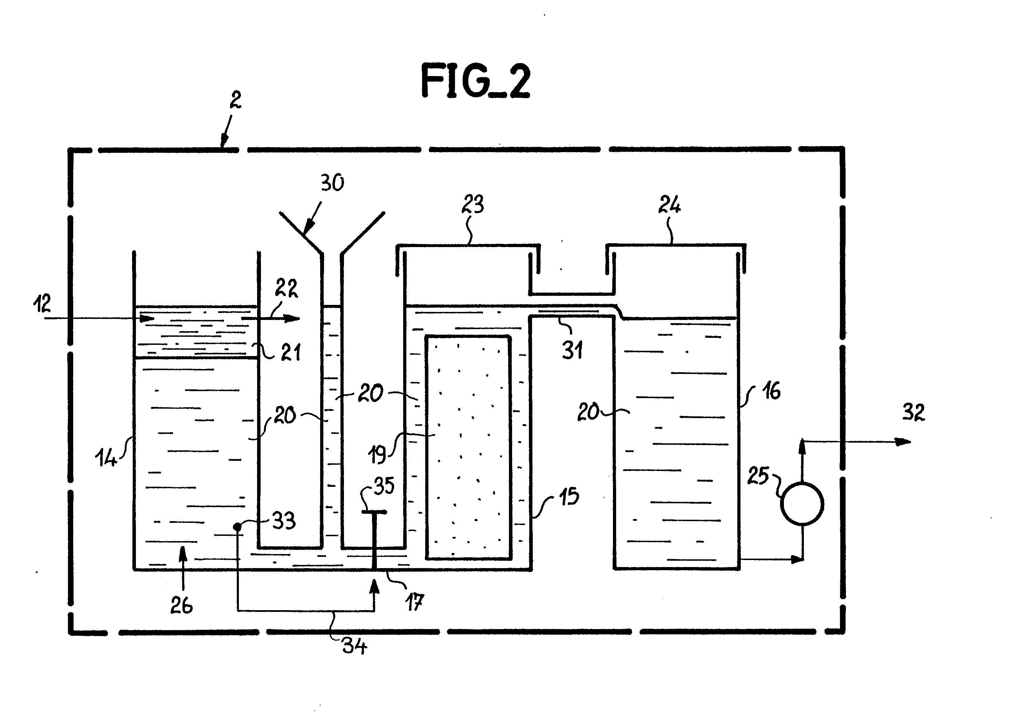

Sur la figure 2, on peut voir une première réalisation du dispositif 2 de lavage et de séchage du liquide secondaire 20 selon l'invention. Le dispositif 2 de la figure 2 comporte notamment des éléments du dispositif 2 de la figure 1.

En cas d'arrêt prolongé de la machine de refusion en phase-vapeur, l'eau 21 contenue dans la cuve de lavage 14 et le liquide secondaire 20 contenu dans la cuve de séchage 15 et dans la réserve 16, s'évaporent. Le liquide secondaire 20 est beaucoup plus volatil que l'eau 21. Au fur et à mesure que le liquide secondaire 20 s'évapore de la cuve de séchage 15, il est remplacé par le liquide 20 provenant de la cuve 14 qui communique avec lui par la tuyauterie 17. Si l'évaporation se poursuit, l'eau 21 passe de la cuve 14 dans la cuve 15 saturant la cartouche de séchage 19. En redémarrant la machine on rajoute dans la réserve 16 le liquide secondaire 20. Ainsi la cartouche de séchage 19 étant saturée, l'eau dissoute dans le liquide secondaire 20 n'est plus éliminée. On obtient ainsi la corrosion acide.

Le dispositif selon l'invention comporte des moyens 35 d'isolation hermétique, de la cuve de lavage 14 et de la cuve de séchage 15. Le moyen d'isolation hermétique 35 comporte par exemple un robinet ou une électro-valve. En cas d'arrêt prolongé de la machine la fermeture du robinet 35 empêche l'eau 21 de pénétrer dans la cuve 15.

Avantageusement le dispositif selon l'invention comporte un détecteur de niveau d'eau 33 placé dans la cuve 14. En cas de baisse du niveau de l'eau 21 dans la cuve 14, le dispositif 33 commande la fermeture de l'électro-valve 35 par l'intermédiaire d'une ligne 34.

Selon le dispositif de l'art antérieur, le liquide secondaire 20 était rajouté dans la réserve 16 au fur et à mesure de son évaporation. Le liquide secondaire 20 neuf contenant de l'eau n'était pas séché avant d'être envoyé dans la cuve 1 de la figure 1.

Avantageusement le dispositif selon l'invention comporte des moyens 30 de remplissage permettant de rajouter du liquide secondaire 20 avant son passage dans la cuve de séchage 15. Le moyen de remplissage 30 est par exemple fixé sur la conduite 17. Ainsi le liquide secondaire 20 neuf est débarrassé de l'eau dissoute avant d'être envoyé par la pompe 25 par l'intermédiaire du tuyau 32 vers la cuve 1 de la figure 1.

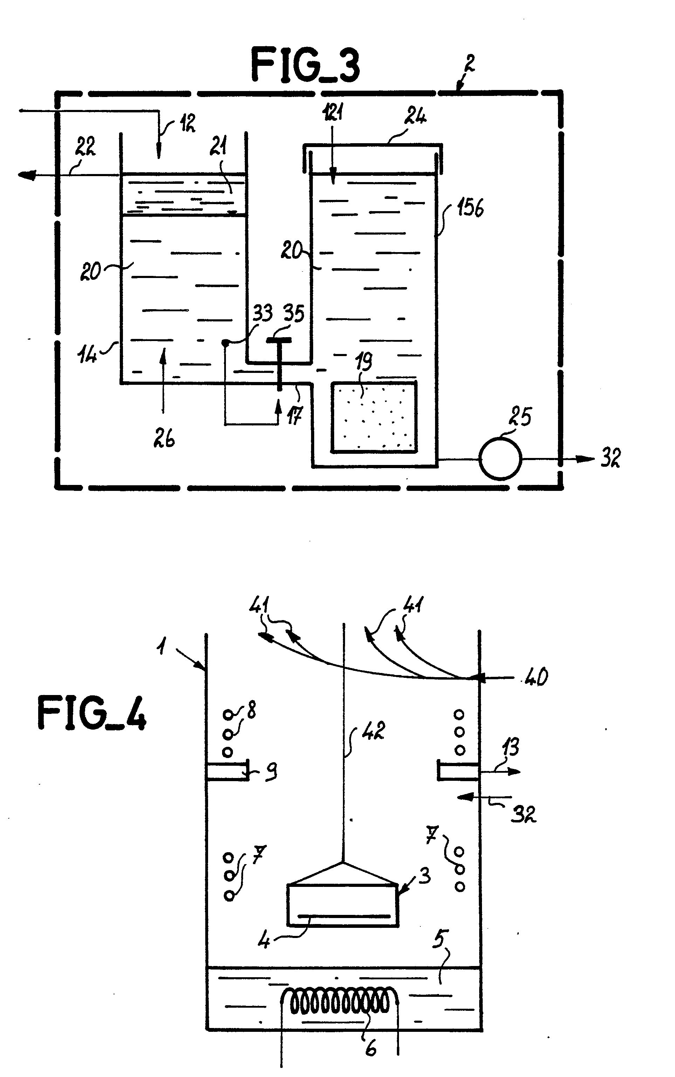

Sur la figure 3, on peut voir une variante de réalisation du dispositif 2 selon l'invention. Le dispositif de séchage et de lavage du liquide secondaire 20, illustré sur la figure 3, comporte une cuve de lavage 14 ainsi qu'une cuve de réserve 156 contenant une cartouche de séchage 19. Les moyens d'isolation hermétique entre la cuve de lavage 14 et la réserve 156 sont disposés sur le conduit 17 les reliant. La cartouche de séchage 19 est disposée par exemple au fond de la réserve 156 en dessous du niveau du fond de la cuve de lavage 14. Ainsi, aussi bien le liquide 20 arrivant de la cuve 14 que le liquide secondaire 20 neuf rajouté dans la cuve 156 est séché par la cartouche 19 avant d'être envoyé par le moyen de pompage 25 au travers de la tuyauterie 32 vers la cuve 1 de la figure 1. Dans un exemple de réalisation du dispositif selon l'invention l'arrivée 12 de la tuyauterie 13 débouche au-dessus de l'eau 21 améliorant l'efficacité de lavage du liquide secondaire 20.

Sur la figure 4, on peut voir une variante de réalisation de la cuve 1 selon l'invention. En plus des dispositifs que comportait la cuve 1 de la figure 1, la cuve selon l'invention comporte des moyens 40 d'injection d'un gaz 41 ne réagissant pas chimiquement avec le fluide primaire 5 et le fluide secondaire 20. Le gaz 41 prévient la formation d'acide en empêchant la vapeur d'eau présente dans l'atmosphère de pénétrer dans la cuve 1. D'autre part en isolant les vapeurs et liquide secondaire 20 de l'atmosphère, le gaz 41 diminue la consommation du liquide secondaire 20.

Le gaz 41 est par exemple de l'azote ou de l'air séché.

Le procédé de soudure par exemple des composants électroniques sur un circuit imprimé comporte les étapes suivantes :

-mise en marche de la machine de refusion en phase vapeur selon l'invention ;

-mise en place de la soudure par exemple sous forme de pâte aux endroits des connexions désirées par exemple en utilisant un pochoir ;

-mise en place sur le circuit imprimé des composants à souder ;

-mise en place du circuit imprimé dans une nacelle 3 ;

-descente de la nacelle 3 dans la partie de la cuve 1 comportant une zone de vapeur saturée du liquide primaire 5 ;

-remontée de la nacelle 3 portant le circuit imprimé sur lequel les composants sont soudés.

Avantageusement, une fois la machine à refusion phase-vapeur est en fonctionnement on effectue la soudure d'une pluralité de cartes.

Au fur et à mesure qu'il se condense sur le serpentin 8 le liquide secondaire 20 est lavé et séché pour être réutilisé dans la machine selon l'invention.

Le dispositif et le procédé de soudure par refusion en phase-vapeur permet de limiter la corrosion des machines, des composants et des circuits soudés dont on prolonge ainsi la durée de vie. La limitation de la corrosion des composants soudés est d'autant plus importante qu'actuellement on utilise la soudure à refusion en phase-vapeur pour des dispositifs de haute technologie très difficilement accessibles une fois assemblés. Par exemple, on utilise le procédé de soudure par refusion en phase-vapeur pour des équipements électroniques des satellites.

L'invention s'applique principalement à la soudure en phase vapeur.

**Revendications**

1. Machine de refusion en phase vapeur comportant une cuve contenant un liquide primaire (5) en ébullition et un liquide secondaire (20) vaporisé, destiné à limiter les pertes du liquide primaire (5), des moyens de lavage (14), des moyens de séchage (15, 19) de liquide secondaire (20), une réserve (16) de liquide secondaire (20), caractérisée par le fait qu'elle comporte des moyens (35) d'isolement hermétique des moyens de lavage (14) et des moyens de séchage (15, 19) du liquide secondaire (20).

2. Machine selon la revendication 1, caractérisée par le fait que les moyens (35) d'isolation hermétique comportent une électrovalve.

3. Machine selon la revendication 1 ou 2, caractérisée par le fait que les moyens de lavage - (14) comportent un détecteur (33) de niveau d'eau connecté à des moyens (34) de commande des moyens (35) d'isolement hermétique.

4. Machine selon la revendication 1, 2 ou 3, caractérisée par le fait qu'elle comporte des moyens (30) de remplissage en liquide secondaire (20) situé en amont des moyens de séchage (19).

5. Machine selon la revendication 4, caractérisée par le fait que les moyens (30) de remplissage en liquide secondaire (20) sont situés sur un conduit - (17) reliant les moyens de lavage (14) aux moyens de séchage (19, 15).

6. Machine selon l'une quelconque des revendications précédentes, caractérisée par le fait que la réserve (16) de liquide secondaire (20) comporte les moyens de séchage (19).

7. Machine selon l'une quelconque des revendications précédentes, caractérisée par le fait qu'elle comporte des moyens (40) d'introduction d'un gaz (41) ne réagissant pas sur le liquide secondaire - (20).

8. Machine selon la revendication 7, caractérisée par le fait que le gaz introduit (41) est de l'azote.

9. Machine selon la revendication 7, caractérisée par le fait que le gaz introduit (41) est de l'air séché.

10. Procédé de soudure de circuit électrique, caractérisé par le fait qu'il utilise une machine de refusion en phase vapeur selon l'une quelconque des revendications précédentes.

# FIG_1

0 198 757

# FIG_2

0 198 757

# FIG_3

# FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 090 843 (TZE YAO CHU et al.)<br>* Colonne 2, lignes 47-64; colonne 4, lignes 39-44; colonne 6, ligne 63 - colonne 7, ligne 5; figure 1 *<br><br>--- | 1,10 | B 23 K 1/00 |
| A | FR-A-2 507 918 (THE HTC CORPORATION)<br>* Page 3, ligne 21 - page 4, ligne 23; page 9, ligne 33 - page 10, ligne 27; figure 5 *<br><br>--- | 1,10 | |
| A | TIN AND ITS USES, no. 130, 1981, pages 1-4, Greenford, GB; S. KARPEL: "Mass-soldering equipment for the electronics industry"<br><br>----- | 1,10 | |

DOMAINES TECHNIQUES RECHERCHES (Int. Cl.4)

B 23 K
H 05 K

Le présent rapport de recherche a été établi pour toutes les revendications

| Lieu de la recherche | Date d'achèvement de la recherche | Examinateur |
|---|---|---|
| LA HAYE | 03-07-1986 | ARAN D.D. |